# EUROPEAN PATENT SPECIFICATION

(11) **EP 1 553 838 B1**
(45) Date of publication and mention of the grant of the patent: **02.08.2006**
(21) Application number: 02778171.5
(22) Date of filing: 23.10.2002
(51) Int. Cl.: A21D 6/00, A21D 2/14

(54) **FLOUR TREATMENT METHOD**
MEHLBEHANDLUNGSVERFAHREN
PROCEDE DE TRAITEMENT DES FARINES

(43) Date of publication of application: 20.07.2005
(73) Proprietor: Ljungström, Marc, 374 23 Karlsham (SE)
(72) Inventor: Ljungström, Marc, 374 23 Karlsham (SE)
(74) Representative: Petri, Stellan
(86) International application number: PCT/SE2002/001924
(87) International publication number: WO 2004/037002

(56) References cited:
- EP-A2- 0 105 640
- FR-A1- 2 671 266
- GB-A- 2 002 222
- US-A- 5 384 139

## Description

### FIELD OF THE INVENTION

The invention relates to a method to sterilise flour to reduce the enzymatic activity within the flour as well as to reduce microbial contamination of the flour and thereby minimise pasting of the starch and maintaining the flour in its native form. The invention also relates to the flour obtained by the method and an aseptically packed fluid mixture comprising the flour and a method to produce the aseptically packed fluid mixture.

### BACKGROUND OF THE INVENTION

When grains are grown in the fields, the final quality is very dependent on the climate. If bad weather persists, and/or it is very windy so-called layers are produced, which often result in that the grains possess a high diastatic activity. High diastatic activity means that enzymes are produced/synthesised within the grains, which breaks down the starch during the use of the grain within the food industry or baking in households.

One way to screen the quality of the grains after harvest is to use the so-called Falling Number, which is a number obtained by a method which measures the diastatic activity. A high Falling-Number implies low diastatic activity and vice-versa, which means that, grains obtaining a high Falling-Number has a high enzymatic activity and has been growing under bad conditions in the field. When high enzyme activity is prevalent, the microbial contamination level in the grains are most often high. Grains possessing high diastatic activity and a high microbial contamination level is not suitable for the production of flour to be used in food products, but is used instead for the production of animal feed, which reduces the economic value for the farmer.

Heat treatment of flour is one way to reduce enzymatic activity (compare e.g. FR-A-2 671 266 and EP-A-0 105 640). However, high heat treatments result in colour changes and taste changes of the flour, Furthermore, reduction of the microbial level is not satisfactory since the use of heat treatment has to be conducted in a sufficiently dry environment to avoid problems such as gelatinisation of starch within the flour. If this happens, the basic properties of the flour become altered. It is previously known that a reduction of microbes takes place more efficiently in the presence of water. For example, 10 minutes at 121 °C in a humid environment is used to preserve sterility, while 3 hours at 180 °C is necessary to effect a dry sterilization. Such high temperatures in flour result in an unfavorable strong dextrinisation (i.e., dry heat degradation) of starch fraction, as well as changes in smell and colour.

Another method to reduce the number of bacteria is to irradiate with γ-rays. However, from the consumer's viewpoint, the technology is intuitively negative, which has resulted in negligible use of this method in industry, even though it is permitted within the EU and by the Swedish Food Agency to be used to reduce the bacterial number in spices. Products may also be sterilised by other known techniques like, fumigation using, for example, ethylene oxide, propylene oxide and sulphur dioxide. The first two mentioned gases lead to formation of toxic products, such as chlorohydrins, which is why the method using fumigation is forbidden in more and more countries all over the world. Sulphur dioxide is very toxic, and forms a hazard to the industrial staff who have to perform the fumigation. A common example of the use of this method is the conservation of different fruitpulp masses.

Surfaces have, since the beginning of the 1900's, been disinfected with 70 % (volume/volume) ethanol, both within healthcare and the food industry. Ethanol of this strength has proven to be effective towards vegetative bacteria, but insufficiently effective towards bacteria in the spore stages, which survive the treatment. Since these spores even survive the heat treatment to which the flour is exposed to during the baking process. This method is far from satisfactory. At the same time, the use of ethanol does not contribute to a reduction of excessive enzymatic activity in the flour.

The food industry has for a long time been trying to sterilise and aseptic pack mixtures based on flour suspended in a liquid to enable the consumers to bake themselves without any prior steps of preparation of the mixture.
However, problem arises when the sterilisation requires heat treatment in a water containing environment. Such a treatment is not possible to be used on a mixture of flour and liquid since the amount of flour needs to be maintained at a high level to obtain a solid product after baking. Additionally, if the mixture containing flour and liquid is heat treated, the baking will take place already during the heat treatment (sterilisation), and the equipment used for sterilisation will be plugged up by baked (expanded) products.
One way to solve the problem is to use a low careful heat treatment, to achieve, pasteurisation of the mixture without changing the properties of the starch within the flour. The temperature to be used in such a method should not be higher than 60 °C, since at this temperature, the starch, at least in wheat, which is the most commonly used flour product for the preparation of mixtures, begins to exhibit stickiness, i.e., obtain pasting qualities. Additionally, the product has to be placed cold such as in a refrigerator prior to use, which gives the product a very limited lifetime.

The present invention provides a new method, which enables the possibility to sterilise flour as it is in dry conditions. The method is also an effective method to treat without changing the properties of the flour. The method further reduces the enzymatic activity within the flour and eliminates unfavourable microbes present within the flour, including spores.

Additionally the invention provides a new aseptically packed fluid mixture, in which the flour and the liquid are mixed and may be stored in room temperature prior to use.

### SUMMARY OF THE INVENTION

The invention relates to a method to sterilise flour, in which the enzymatic activity is reduced and microbes are eliminated, without allowing the starch to gelatinise and become sticky. Thereby, it becomes possible to use flour, which has been growing under unfavourable conditions for the human consumption. Flour, which today either are discarded or used as animal feed.

According to a first aspect the invention relates to a method to sterilise flour, comprising the steps of providing the flour obtained from grain, mixing the flour with alcohol, heating the mixture of flour and alcohol, under closed conditions, to a temperature above 78 °C; and obtaining a flour product having a reduced enzymatic activity and a reduced /eliminated microbial contamination without pasting/gelatinisation of the starch within the flour and the product obtained therefrom.

According to a second aspect the invention relates to an aseptically packed fluid mixture, which may be stored at room temperature prior to use and a method to produce the aseptically packed fluid mixture. The aseptically packed fluid mixture comprises a flour product sterilised in a manner described above and a sterile fluid phase, wherein the starch of the flour remains in a non-gelatinised condition after packaging.

The natural occurring gelatinisation properties of the starch are maintained after the method to sterilise the flour.

### DETAILED DESCRIPTION OF THE INVENTION

### Method for sterilisation

The invention relates to a method for sterilisation of flour in which alcohol, such as ethanol is heated to a temperature, which is above the boiling point for the alcohol/water azeotrope. The method, result in a powerful increase of alcohol's disinfectant effect, so that even bacteria in the spore-forming stages are destroyed/ eliminated. By such a method it then becomes possible to obtain complete sterility at a lower temperature, i.e., a milder treatment as compared to when water is used in the sterilisation step. Additionally the enzyme activity is completely eliminated after the treatment and yet, surprisingly, the starch within the flour remains intact after the treatment.

The flour obtained from grain, to be sterilised is mixed with alcohol/ethanol. The quantity of alcohol, which is used is adjusted so that the flour is always in the form of a powder and may be less than 20 % (weight /volume). After the flour and the alcohol have been mixed and is more or less homogenous distributed, the mixing tank is sealed and the heat treatment starts. It is important that the tank is so tightly sealed that pressure is obtained from the quantity of alcohol, which is evaporated, when the boiling point of the alcohol/water azeotrope (78 °C) is reached. In this way, there is no ethanol loss, and it becomes possible to reach temperatures above the boiling point of the azeotrope. It is through the increase of the temperature that the strongly increased disinfectant effect is obtained.

Depending on the pressure resistance of the tank to be used, the flour/alcohol mixture may be treated to a temperature from about 78 °C to about 120 °C. An increase in the temperature result in general in a decrease in the time necessary to be used. Heating to 95 °C, result in general to a complete sterility within 5-30 minutes. The pressure in such a case is often less than 1.5 bars.

The sterilisation may be performed from about 1 second to about 5 hours using from about 1 to about 5 bars, depending on the microbiological quality of the starting material.

When the sterilisation has been finalised, the pressure is released, often through the opening of a valve, which may be connected to a condenser, and the evaporated ethanol may then be used again in a further sterilisation cycle. Through this flashing process the product experiences a rapid cooling down to the azeotrope's boiling point. When the pressure equalise is restored, a vacuum may be applied, if desired, to eliminate residuals of the ethanol. This stage is not a necessity, since small amounts of ethanol are not toxic and will escape later during baking of the product, before consumption of the food product.

A number of different commercially available equipments may be found, which are directly suited for use in the described flour treatment process, such as for example, Vakuum Nauta-dryer or Ross conical vertical blender/dryer.

The sterilisation method may be used for all kinds of grains, such as maize and rice. It also includes cereals, such as wheat, oats, barley and rye.

### Aseptically packed fluid mixture and method to produce the mixture

Additionally the invention relates to an aseptically packed fluid mixture comprising the flour product produced by the above mentioned method and at least one fluid phase, wherein the starch of the flour remains in a non-gelatinised condition after packaging. The fluid phase is described in detail below. Such an aseptically packed fluid mixture is in favour since there is no need to store the product in a fridge prior to use.

### Production of the aseptically packed fluid mixture

### The flour product

The flour product will be sterilised using the above, mentioned method in a separate process line from the fluid phase. After sterilisation the flour product will be kept in a sterile compartment until being mixed with the sterile fluid phase.

### The fluid phase

The ingredients, which comprise the fluid phase, which are to be sterilised are separately sterilised. One way is to suspend the ingredients in a tank and then sterilise the tank. The sterilisation may be performed either on a batch-to-batch basis, or on a continuous basis. The continuous process is preferred since it would be possible then to use the known HTST/UHT technique, implying that through the use of high temperatures, only a very short exposure time (seconds to minutes, depending on the end temperature) is required. This, results in better colour, taste and smell properties of the sterilised liquid/fluid phase and gives a higher final quality to the sterilised product.

### Mixture preparation

The separately sterilised flour product and fluid phase are then mixed with each other using defined amounts of the flour and the fluid. One way is to weight and combine them according to a recipe, and then mix them under aseptic conditions until the mixture is homogenous. To achieve homogeneity, the mixture may be homogenised using traditional food production equipment, which is well known for a person skilled in the art. The weighting may be performed using weighing cells supplied in the sterile mixing tank.

Either the flour product is added to the fluid phase or the opposite. The choice of the order of mixing depends on the practical conditions during the preparation process.

The mixing may either be performed under sterile conditions or aseptically.

### Packaging

All forms of sterile packages, which are filled through "aseptic technologies" or under sterile conditions may be used for the mixtures named in this invention. There is, however, a preference for packages that have some airspace in the top parts of the packages so that it is possible to shake the product and in this way, disperse the sedimented starch particles. One way to avoid sedimentation is the use of a suitable hydrocolloid, such as xanthan gum or carrageenan within the mixture. Additionally synthetic, semisynthetic hydrocolloids or mixtures thereof may be used.

Examples of aseptically packed fluid mixtures includes, pancake mixes, waffle mixes, mixtures for batters as well as cake mixtures for eg., spongecakes, cakes and muffins.

Even if some of the examples are based on pancakes, this does not exclude the possibility to vary the ingredients or to add extra components.

By varying the content of the flour, adding eggs to the ingredient list, etc., a list of different products may result - for example, wafflemix, cake mix, batters for pancakes and similar, which, of course, are implied as included within the framework of the present invention.

### EXAMPLES

### Example 1

To flour obtained from a highly infected grain having a Falling-Number of 80, was bacteria added in the form of a freeze-dried vegetative lactic acid bacteria culture. The added inoculum was approximately 10⁸ bacteria/g flour. The water content in the flour was 13%.

500 g of the flour was placed in a pressure reactor with a powder stirrer. 50 ml 95% (volume/volume) ethanol was nozzled in a fine dim while the flour was mixed. When the mixture was homogenous, the reactor was sealed and the heating process initiated.

The mixture was heated to 95°C and maintained at that temperature for 20 minutes. Then, the mixture was flash-cooled resulting in a fast temperature drop to 80°C. A minor vacuum was applied to remove the leftover ethanol. When all the ethanol was gone, the flour was cooled down to room temperature before the flour was removed from the reactor. The flour retained its powder characteristics.

The moisture content in the sterilised flour was, after treatment, 12%, which is an indication that a minor part of the moisture of the flour was removed during the vacuum treatment.

### Example 2

The flour obtained from example 1 was examined under polarised light in a microscope (a method to see if the starch has gelatinised or not) and was found to have retained its birefringence properties.

### Example 3

Analysis of the Falling-Number after treatment showed that the value had increased to 285, which is considered to be optimal for a breadbaking flour. This shows that the diastatic activity has ceased.

### Example 4

Comparison in a Brabender Amyloviscograph (an analytical instrument to study starch gelatinisation and viscosity) at 7 % dry matter showed that, for untreated flour, a straight line plot was obtained, implying that no increase in viscosity could be observed. This was because the starch degrading enzymes decomposes the starch resulting in the absence of viscous properties.

Analysis of the treated flour from example 1 showed a strong pasty process, which was comparable to traditional flour possessing a high Falling-Number. This shows that the starch degrading enzymes in the original flour have been eliminated.

### Example 5

Microbial analysis of the treated flour showed absence of microbial contamination for all dilution levels (smallest dilution was < 1/10 of the original sample). The analysis includes the total aerobic count, coliforma enterobacteria as well as yeast and moulds using conventional methods well-known for a person skilled in the art.

### Example 6

The flour from example 1 was tested against a conventional household flour in a standard pancake recipe. No negative effects of the above mentioned treatment were detected during the bakingf process. During the preparation of the pancake mixture, it was found easier to prepare a mixture using the flour from example 1. The standard flour (wheat flour of commercial quality for baking purposes in industry and household) was found to form more clumps (or form lumps more easily).

### Example 7

50 kg of flour with a total bacterial count of 20,000/g was loaded and to this 5 litres 95% (volume/volume) ethanol was added in a large double mantle vacuum tumbling container. The mixture was heated to 95 °C. Since, the heating time to reach 95 °C was so much longer than the experiment described in example 1, the process was stopped immediately when the required temperature was reached. The ethanol was removed from the container and the pressure released. Samples for bacterial analysis were taken.

### Example 8

The results from the microbiological tests from the trial in example 7 showed that all the tests were free from growths. No spores could be detected.

### Example 9

In a tank 100 kg skim milk powder, 4.13 kg salt, 47.5 kg cooking oil and 933 litres of water were suspended and pumped through an indirect tubular heat exchanger and heated to 127 °C and held constant at that temperature for 60 seconds. The mixture was then pumped further to a tube cooler and cooled to 20 °C.

In a pressure proof tank 125 kg wheat flour was added and 12.5 litre 95 % (volume/volume) ethanol streamed in through a nozzle during the mixing process. The tank was then closed and heating was started. When a temperature of 95 °C was reached, the temperature was held constant for 20 minutes. Then the positive pressure of the alcohol was released and the flour cooled down to 50 °C.

The sterilised flour was blended aseptically with 415 kg of the sterilised liquid phase described above to reach a total weight of 540 kg in the mixture.

The mixture was pumped through a milk homogeniser to a sterile tank before the filling machine.

The product was packed in 1-liter Tetra packages and an aseptically packed fluid mixture consisting of a pancake mix was produced.

### Example 10

Microscopy of the packed pancake mix showed that the starch component was intact and kept its properties of birefringence in plane polarised light, indicating that the crystal structure is unchanged after the heat treatment.

### Example 11

Microbial analysis were performed by cultivation at 3 different temperatures, 25, 40 and 55 °C, immediately after production, and after pre-incubation in an incubator at 40 °C for 2 days. All samples were free from growth. This shows that the product is sterile.

### Example 12

One of the packages produced in EXAMPLE 9, was baked after 2 days and another one after 14 days storage at room temperature. No difference in the properties of the product could be observed. Both gave well-baked pancakes as a result having a excellent taste.

## Claims

1. A method to sterilise flour, comprising the steps of:
a) providing the flour obtained from grain;
b) mixing the flour with alcohol;
c) heating the mixture of flour and alcohol, under closed conditions, to a temperature above 78°C; and
d) obtaining a flour product having a reduced enzyme activity and microbial contamination without gelatinisation of the starch part of the flour.

2. The method according to claim 1, wherein the alcohol content in b) is less than 20 % (weight/volume) of the total mixture.

3. The method according to any of the preceding claims, wherein the temperature in c) is between 78°C and 120°C.

4. The method according to any of the preceding claims, wherein the temperature in c) is maintained from about 1 second to about 5 hours.

5. The method according to any of the preceding claims, wherein the closed conditions in c) is under pressures held between from about 1 to about 5 bars.

6. The method according to any of the preceding claims, wherein the flour is obtained from maize, rice and cereals such as wheat, oats, barley and rye.

7. A flour product obtainable by the method according to any of the preceding claims.

8. An aseptically packed fluid mixture comprising;
a) the flour product according to claim 7 and
b) a sterile fluid phase,
wherein the starch of the flour remains in a non-gelatinised condition after packaging.

9. The aseptically packed fluid product according to claim 8, wherein the product comprises a hydrocolloid such as xanthan gum or carragenan, synthetic, semisynthetic hydrocolloids or mixtures thereof.

10. A method to produce an aseptically packed fluid according to any of the claims 8-9 comprising the steps of:
a) providing and sterilising a fluid phase;
b) providing and sterilising flour separately from the fluid phase;
c) mixing the fluid phase and the flour product aseptically or sterile to a fluid mixture; and
d) aseptically or sterile pack the fluid mixture, where the starch of the flour remains in a non-gelatinised condition after the treatment.

11. The method according to claim 10, wherein a hydrocolloid such as zanthan gum or carragenan, synthetic, semisynthetic hydrocolloids or mixtures thereof is added to the fluid mixture under c).

## Patentansprüche

1. Ein Verfahren zur Sterilisation von Mehl, das folgende Schritte umfasst:
a) Bereitstellen des aus Getreide gewonnenen Mehls;
b) Vermischen des Mehls mit Alkohol;
c) Erhitzen der Mischung aus Mehl und Alkohol unter abgeschlossenen Bedingungen auf eine Temperatur über 78° C; und
d) Gewinnen eines Mehlprodukts mit reduzierter Enzymaktivität und mikrobieller Kontamination ohne Verkleisterung des Stärkeanteils im Mehl.

2. Das Verfahren nach Anspruch 1, wobei der Alkoholgehalt in b) weniger als 20% (Gewicht/Volumen) der Gesamtmischung beträgt.

3. Das Verfahren nach einem der vorhergehenden Ansprüche, wobei die Temperatur in c) zwischen 78° C und 120° C liegt.

4. Das Verfahren nach einem der vorhergehenden Ansprüche, wobei die Temperatur in c) von etwa 1 Sekunde bis etwa 5 Stunden aufrechterhalten wird.

5. Das Verfahren nach einem der vorhergehenden Ansprüche, wobei die abgeschlossenen Bedingungen in c) im Druckbereich zwischen etwa 1 bis etwa 5 bar gehalten werden.

6. Das Verfahren nach einem der vorhergehenden Ansprüche, wobei das Mehl aus Mais, Reis und Getreide, wie z.B. Weizen, Hafer, Gerste und Roggen, gewonnen wird.

7. Ein durch das Verfahren nach einem der vorhergehenden Ansprüche gewinnbares Mehlprodukt.

8. Eine aseptisch verpackte Fluidmischung, die folgendes enthält:
a) das Mehlprodukt nach Anspruch 7 und
b) eine sterile Flüssigphase,
wobei die Stärke des Mehls nach der Verpackung in unverkleistertem Zustand bleibt.

9. Das aseptisch verpackte Fluidprodukt nach Anspruch 8, wobei das Produkt ein Hydrokolloid enthält, wie z.B. Xanthan Gum oder Carragenan, synthetische, halbsynthetische Hydrokolloide oder Mischungen daraus.

10. Ein Verfahren zur Herstellung eines aseptisch verpackten Fluids nach einem der Ansprüche 8-9, das folgende Schritte umfasst:
a) Bereitstellen und Sterilisieren einer Flüssigphase;
b) Bereitstellen und Sterilisieren von Mehl getrennt von der Flüssigphase;
c) aseptisches oder steriles Mischen der Flüssigphase und des Mehlprodukts zu einer Fluidmischung; und
d) aseptische oder sterile Verpackung der Fluidmischung, in der die Stärke des Mehls nach der Behandlung in unverkleistertem Zustand bleibt.

11. Das Verfahren nach Anspruch 10, wobei ein Hydrokolloid, wie z.B. Xanthan Gum oder Carragenan, synthetische, halbsynthetische Hydrokolloide oder Mischungen daraus unter c) zur Fluidmischung zugegeben werden.

## Revendications

1. Procédé de stérilisation de farines, comprenant les étapes consistant à :
a) fournir la farine obtenue à partir d'une céréale ;
b) mélanger la farine avec de l'alcool ;
c) chauffer le mélange farine et alcool, en milieu confiné, à une température supérieure à 78°C ; et
d) obtenir un produit de la farine ayant une activité enzymatique et une contamination microbienne réduites sans gélatinisation de la fraction amylacée de la farine.

2. Procédé selon la revendication 1, dans lequel la teneur en alcool à l'étape b) est inférieure à 20 % (poids/volume) du mélange total.

3. Procédé selon l'une quelconque des revendications précédentes, dans lequel la température à l'étape c) est comprise entre 78°C et 120°C.

4. Procédé selon l'une quelconque des revendications précédentes, dans lequel la température à l'étape c) est maintenue pendant une durée allant d'environ 1 seconde à environ 5 heures.

5. Procédé selon l'une quelconque des revendications précédentes, dans lequel le milieu confiné à l'étape c) est sous une pression maintenue entre environ 1 bar et environ 5 bars.

6. Procédé selon l'une quelconque des revendications précédentes, dans lequel la farine est obtenue à partir du maïs, du riz et de céréales telles que le blé, l'avoine, l'orge et le seigle.

7. Produit de la farine pouvant être obtenu par le procédé selon l'une quelconque des revendications précédentes.

8. Mélange fluide en emballage aseptique comprenant :
a) le produit de la farine selon la revendication 7 et
b) une phase fluide stérile,
dans lequel l'amidon de la farine reste dans un état non gélatinisé après emballage.

9. Produit fluide en emballage aseptique selon la revendication 8, dans lequel le produit comprend un hydrocolloïde tel que la gomme de xanthane ou le carragenan, des hydrocolloïdes synthétiques, semi-synthétiques ou des mélanges de ceux-ci.

10. Procédé de production d'un fluide en emballage aseptique selon l'une quelconque des revendications 8-9, comprenant les étapes consistant à :
a) fournir et stériliser une phase fluide ;
b) fournir et stériliser la farine séparément de la phase fluide ;
c) mélanger de manière aseptique ou stérile la phase fluide et le produit de la farine en un mélange fluide ; et
d) emballer de manière aseptique ou stérile le mélange fluide, dans lequel l'amidon de la farine reste dans un état non gélatinisé après le traitement.

11. Procédé selon la revendication 10, dans lequel à l'étape c), on ajoute au mélange fluide un hydrocolloïde tel que la gomme de xanthane ou un carraghénane, des hydrocolloïdes synthétiques, semi-synthétiques ou des mélanges de ceux-ci.
